(19) Europäisches Patentamt
European Patent Office
Office européen des brevets

(11) EP 2 644 631 A1

(12) # EUROPEAN PATENT APPLICATION
published in accordance with Art. 153(4) EPC

(43) Date of publication:
**02.10.2013 Bulletin 2013/40**

(21) Application number: **11843403.4**

(22) Date of filing: **08.11.2011**

(51) Int Cl.:
***C08F 290/12*** *(2006.01)* ***C09D 4/02*** *(2006.01)*
***C09D 157/06*** *(2006.01)*

(86) International application number:
**PCT/JP2011/075712**

(87) International publication number:
**WO 2012/070382 (31.05.2012 Gazette 2012/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 JP 2010259975**

(71) Applicant: **Showa Denko K.K.**
**Tokyo 105-8518 (JP)**

(72) Inventors:
- **DOI, Mitsuru**
  **Tokyo 105-8518 (JP)**
- **YASUI, Yoshikatsu**
  **Tokyo 105-8518 (JP)**
- **ISHII, Nobuaki**
  **Tokyo 105-8518 (JP)**
- **OHTAKE, Isao**
  **Tokyo 105-8518 (JP)**
- **URAKAWA, Katsuro**
  **Tokyo 105-8518 (JP)**
- **OI, Hiroko**
  **Tokyo 105-8518 (JP)**
- **HATTORI, Yotaro**
  **Tokyo 105-8518 (JP)**

(74) Representative: **Strehl Schübel-Hopf & Partner**
**Maximilianstrasse 54**
**80538 München (DE)**

(54) **CURABLE RESIN COMPOSITION**

(57) The present invention is a curable resin composition comprising a copolymer (A) represented by the following general formula (1), silica fine particles (B), a reactive monomer (C) and a polymerization initiator (D). In the general formula (1), X is an atomic group formed by removing "k" mercapto groups from a multifunctional thiol compound having at least "k" mercapto groups; Y is a monovalent organic group derived from a copolymer formed by copolymerizing unsaturated monomers; and "k" is an integer of 3 to 10. The present invention can provide a hard coat agent which has low curing shrinkage and which has both low curing shrinkage and antiblocking properties as needed; a hard coat film and a hard-coat treated plastic substrate having high pencil hardness and low curling properties, by using this hard coat agent.

$$X\text{-}\left(S\text{-}Y\right)_k \qquad (1)$$

EP 2 644 631 A1

## Description

### TECHNICAL FIELD

The present invention relates to an active energy ray curable hard coat agent composition which has low curing shrinkage and is capable of forming a cured coating film having high pencil hardness and being excellent in scratch resistance and transparency, as well as being capable of providing a cured coating film with properties such as antiblocking properties as needed, and which is used for surface-protecting coating of an optical film such as a flat panel display and of a plastic substrate such as a polycarbonate resin, an ABS resins and an acrylic resin. The present invention also relates to a cured product thereof, and a film and an article that comprise a coating film formed from the cured product.

### BACKGROUND ART

Since surfaces of plastic sheets, plastic films and the like are relatively flexible, in order to increase their surface hardness, the surfaces of materials are provided with hard coat layers. With regard to resin substrates such as polycarbonate and ABS, too, similar treatments have come to be widely carried out in order to prevent scratch of the surfaces and protect the pattern of the surfaces. Conventionally, as these hard coat layers, organic substances such as multifunctional acrylates have been used. In this case, however, curing shrinkage and thermal degradation, shrinkage due to hygrothermal aging are large, which is often accompanied by curling of ends of plastic sheets and plastic films (curling), or cracking and the like on substrates. In particular, in order to increase the pencil hardness, the influence by resin substrates, the thickness, hardness and plasticity of cured films and the like need to be considered and optimum formulation needs to be prepared according to use.

Under the above circumstances, Patent Literature 1 discloses an ultraviolet ray curable resin raw material composition containing in the molecule a (meth)acryloyl group-having urethane acrylic monomer, an acrylic monomer having a hydroxyl group and a cyclic ether bond, and colloidal silica. In this composition, colloidal silica is dispersed, but is not incorporated into the crosslinking system because of the absence of reactive unsaturated groups. Thus, desired hardness and elasticity may not be obtained, and silica fine particles may fall off.

Patent Literature 2 discloses a composition containing at least a hexafunctional urethane acrylate, a tetrafunctional or more (meth)acrylate monomer, and a colloidal silica surface-treated with a silane coupling agent having a reactive (meth)acrylate group in the molecule. According to this method, colloidal silica can be incorporated into the crosslinking system, and high pencil hardness can be exhibited, and the falling-off of the silica fine particles can be prevented. However, because of a large curing shrinkage, radius of curvature upon curing is small, and defects may occur during production process.

### CITATION LIST

### PATENT LITERATURE

[Patent Literature 1] JP- A- 2009- 157315
[Patent Literature 2] JP- A- 2008- 150484

### SUMMARY OF INVENTION

### TECHNICAL PROBLEM

In order to overcome the problems associated with the above conventional art, it is an object of the present invention to provide a hard coat agent which has low curing shrinkage and which has both low curing shrinkage and antiblocking properties as needed. It is another object of the present invention to provide a hard coat film and a hard-coat treated plastic substrate having high pencil hardness and low curling properties, by using such a hard coat agent.

### TECHNICAL SOLUTION

The present inventors have earnestly studied order to overcome the problems associated with the above conventional art, and have found that the combination of a polymer having at least a specific structure, silica fine particles, a reactive monomer and a polymerization initiator overcomes the above problem, and thereby have completed the present invention.

That is, the present invention is summarized as follows.

(1) A curable resin composition comprising a copolymer (A) represented by the following general formula (1), silica fine particles (B), a reactive monomer (C) and a polymerization initiator (D),

[Chem. 1]

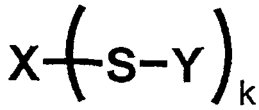

(1)

wherein X is an atomic group formed by removing "k" mercapto groups from a multifunctional thiol compound having at least "k" mercapto groups; Y is a monovalent organic group derived from a copolymer formed by copolymerizing unsaturated monomers; and "k" is an integer of 3 to 10.

(2) The curable resin composition described in the above (1), wherein "Y" in the general formula (1) comprises a monomer unit represented by the following general formula (2).

[Chem. 2]

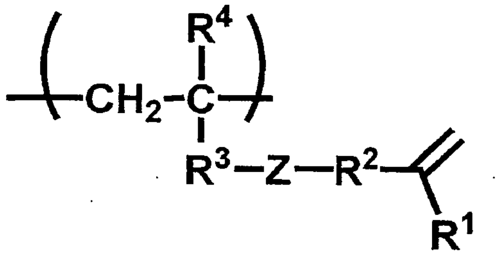

(2)

wherein $R^1$ and $R^4$ are each independently a hydrogen atom or a methyl group; $R^2$ and $R^3$ are each independently an aliphatic hydrocarbon group having 1 to 20 carbon atoms or an alicyclic hydrocarbon group with a cyclic structure having 20 or less of carbon atoms wherein $R^2$ may contain an ester bond and $R^3$ may be a single bond; and Z is a bifunctional organic group having an ester bond or a urethane bond.

(3) The curable resin composition described in the above (2), wherein -Z- in the general formula (2) is represented by any of the following general formulas (3) to (6).

[Chem. 3]

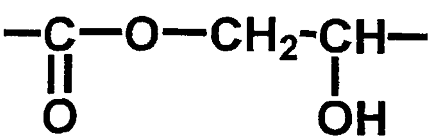

(3)

[Chem. 4]

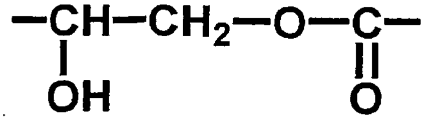

(4)

[Chem. 5]

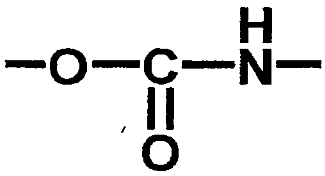

(5)

[Chem. 6]

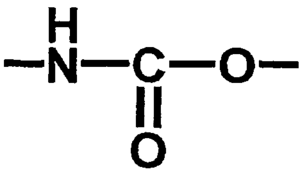

(6)

(4) The curable resin composition described in any one of the above (1) to (3), wherein the silica fine particles (B) are obtained by surface- treating silica fine particles (B'), which are not surface- treated, with at least one of a silane compound (E) represented by the following general formula (7) and a silane compound (E) represented by the following general formula (8) :

[Chem. 7]

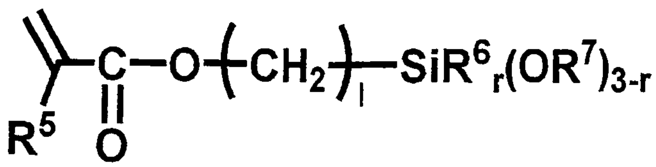

(7)

[Chem. 8]

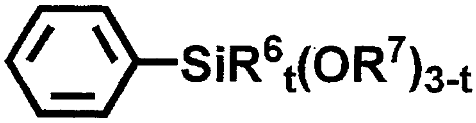

(8)

wherein $R^5$ is a hydrogen atom or a methyl group; $R^6$ is an alkyl group having 1 to 3 carbon atoms or a phenyl group; $R^7$ is a hydrogen atom or a hydrocarbon group having 1 to 10 carbon atoms; "1" is an integer of 1 to 6; and "r" and "t" are each an integer of 0 to 2.

(5) The curable resin composition described in any one of the above (1) to (4), which comprises the silica fine particles (B) in an amount of 5 to 1000 parts by mass with respect to 100 parts by mass of the copolymer (A).
(6) The curable resin composition described in any one of the above (1) to (5), which comprises the reactive monomer (C) in an amount of 1 to 1000 parts by mass with respect to 100 parts of the copolymer (A).
(7) The curable resin composition described in any one of the above (1) to (6), wherein the reactive monomer (C) is at least one monomer selected from the group consisting of trimethylolpropanetri (meth) acrylate, pentaerythritoltri (meth) acrylate, pentaerythritoltetra (meth) acrylate, ditrimethylolpropanetetra (meth) acrylate, dipentaerythritolpenta (meth) acrylate, and dipentaerythritolhexa (meth) acrylate.
(8) The curable resin composition described in any one of the above (1) to (7), which comprises the polymerization initiator (D) in an amount of 0.1 to 50 parts by mass with respect to 100 parts by mass of the total of the curable components.
(9) The curable resin composition described in any one of the above (1) to (8), which comprises a reactive oligomer (F) in an amount of 0. 1 to 500 parts by mass with respect to 100 parts by mass of the copolymer (A).
(10) The curable resin composition described in any one of the above (1) to (9), which comprises a filler.
(11) The curable resin composition described in any one of the above (1) to (10), which comprises a multifunctional thiol compound.
(12) The curable resin composition described in any one of the above (1) to (11), which comprises a multifunctional isocyanate compound.
(13) A hard coat agent comprising the curable resin composition described in any one of the above (1) to (11).
(14) A clear hard coat film or hard coat film for decorative molding which comprises a coating film formed by using the hard coat agent described in the above (13).

## ADVANTAGEOUS EFFECTS OF INVENTION

The present invention provides a hard coat agent which has low curing shrinkage, and which has both low curing shrinkage and antiblocking properties as needed. The present invention also provides a hard coat film such as a clear hard coat film and a hard coat film for decorative molding and a hard-coat treated plastic substrate that are prepared by using this hard coat agent, which has high pencil hardness and low curling properties.

## EMBODIMENTS OF INVENTION

Hereinafter, the present invention is described in detail. In the present specification, the term "(meth) acrylate" means methacrylate and/or acrylate. When structures are described, the cis and trans are not particularly distinguished, and cis and trans are both referred to.

The curable resin composition of the present invention comprises a copolymer (A) represented by the following general formula (1), silica fine particles (B), a reactive monomer (C) and a polymerization initiator (D),

[Chem. 9]

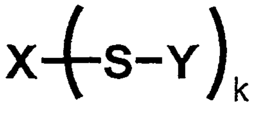
(1)

wherein X is an atomic group formed by removing "k" mercapto groups from a multifunctional thiol compound having at least "k" mercapto groups; Y is a monovalent organic group derived from a copolymer formed by copolymerizing unsaturated monomers; and "k" is an integer of 3 to 10.

The curable resin composition of the present invention may comprise components such as a reactive oligomer (F) and an additive (G), as needed.

i) Copolymer (A)

The copolymer (A) (hereinafter also called the "component (A)") is represented by the above formula (1) and can be synthesized for example by copolymerizing two kinds or more, or three kinds or more, of unsaturated monomers in the presence of a multifunctional thiol compound.

In the formula (1), X is an atomic group formed by removing "k" mercapto groups from a multifunctional thiol compound having at least "k" mercapto groups. The multifunctional thiol compound will be described later.

In the formula (1), S is a sulfur atom contained in a mercapto group of the multifunctional thiol compound.

In the formula (1), Y is a monovalent organic group derived from a copolymer obtained by copolymerizing unsaturated monomers. The unsaturated monomers are described later.

In the formula (1), "k" is an integer of 3 to 10. It is preferable that "k" is within the above range in terms of exhibition of low shrinkage properties and the easiness of controlling the reaction upon copolymerization.

"k" is preferably 3 to 8, more preferably 3 to 6.

In the formula (1), Y preferably comprises a structure represented by the following general formula (2).

[Chem. 10]

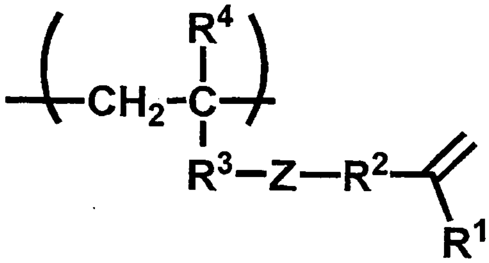
(2)

wherein $R^1$ and $R^4$ are each independently a hydrogen atom or a methyl group; $R^2$ and $R^3$ are each independently an aliphatic hydrocarbon group having 1 to 20 carbon atoms or an alicyclic hydrocarbon group with a cyclic structure having 20 or less of carbon atoms wherein $R^2$ may contain an ester bond and $R^3$ may be a single bond; and Z is a bifunctional organic group having an ester bond or a urethane bond.

In the formula (2), Z is a bifunctional organic group having an ester bond or a urethane bond. -Z- is preferably any one of the following formulas (3) to (6).

[Chem. 11]

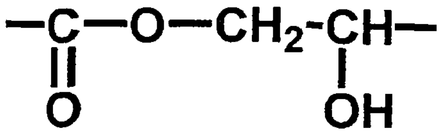

(3)

[Chem. 12]

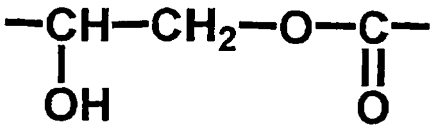

(4)

[Chem. 13]

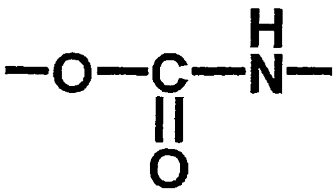

(5)

[Chem. 14]

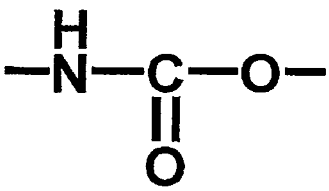

(6)

In the formula (1), Y preferably comprises at least one (meth) acryloyl group selected from the following general formulas (9) to (12).

[Chem. 15]

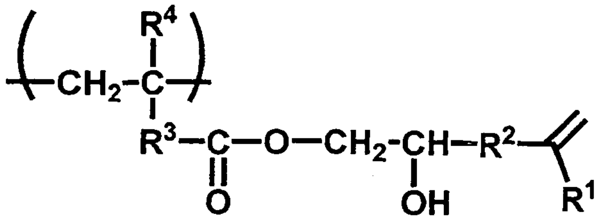

(9)

[Chem. 16]

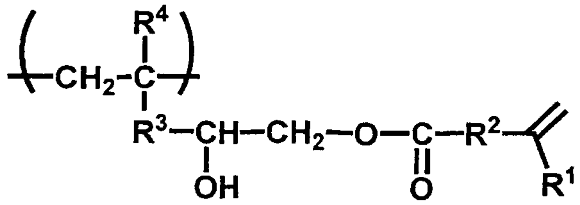

(1 0)

[Chem. 17]

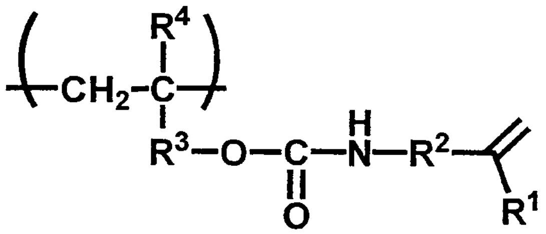

(1 1)

[Chem. 18]

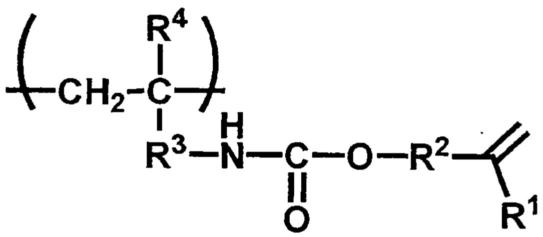

(1 2)

In the formulas (9) to (12), $R^1$ and $R^4$ are each independently a hydrogen atom or a methyl group; $R^2$ and $R^3$ are each independently an aliphatic hydrocarbon group having 1 to 20 carbon atoms or an alicyclic hydrocarbon group with a cyclic structure.

The structure represented by the general formula (9) can be produced for example by copolymerizing a carboxyl group-having acrylic compound (a-1) and other ethylenic unsaturated monomer (a-5) in the presence of a multifunctional thiol compound, and then to the carboxyl groups present at side chains of the resulting polymer, adding a glycidyl group-having acrylic compound (a-2).

The structure represented by the general formula (10) can be produced for example by copolymerizing a glycidyl group-having (meth)acrylic compound (a-2) and other ethylenic unsaturated monomer (a-5) in the presence of a multifunctional thiol compound, and then to glycidyl groups present at the side chains of the resulting polymer, adding a carboxyl group-having (meth)acrylic compound (a-1).

The structure represented by the general formula (11) is produced for example by copolymerizing a hydroxyl group-having (meth)acrylic compound (a-3) and other ethylenic unsaturated monomer (a-5) in the presence of a multifunctional thiol compound, and then to hydroxyl groups present at the side chains of the resulting polymer, adding an isocyanate group-having (meth)acrylic compound (a-4).

The structure represented by the general formula (12) is produced for example by copolymerizing an isocyanate group-having (meth)acrylic compound (a-4) and other ethylenic unsaturated monomer (a-5) in the presence of a multifunctional thiol compound, and then to isocyanate groups present at the side chains of the resulting polymer, adding a hydroxyl group-having (meth)acrylic compound (a-3).

Examples of the carboxyl group-having (meth)acrylic compound (a-1) include (meth) acrylic acid, crotonic acid, fumaric acid, maleic acid, maleic anhydride, 2-methylmaleic acid, itaconic acid, phthalic acid, tetrahydrophthalic acid, tetrahydrophthalic anhydride, metal salts thereof and ammonium salts thereof; (meth) acrylic acid is preferable. Regarding these carboxyl group-having (meth)acrylic compounds (a-1), one kind thereof may be used singly, or two or more kinds thereof may be used in combination.

Examples of the glycidyl group- having (meth) acrylic compound (a- 2) include glycidyl (meth) acrylate, allyl glycidyl ether, methylglycidyl (meth) acrylate, 3, 4- epoxycyclohexyl methyl (meth) acrylate and 4- hydroxybutyl (meth) acrylate glycidyl ether; glycidyl (meth) acrylate is preferable. Regarding these glycidyl group- having (meth) acrylic compounds (a- 2), one kind thereof may be used singly, or two or more kinds thereof may be used in combination.

Examples of the hydroxyl group- having (meth) acrylic compound (a- 3) include 2- hydroxyethyl (meth) acrylate, 3- hydroxypropyl (meth) acrylate, 4- hydroxybutyl (meth) acrylate, polyethylene glycol mono (meth) acrylate, polypropylene glycol mono (meth) acrylate, polyethylene glycol polytetramethylene glycol mono (meth) acrylate, polypropylene glycol polytetramethylene glycol mono (meth) acrylate: 2- hydroxyethyl (meth) acrylate is preferable. Regarding these hydroxyl group- having (meth) acrylic compounds (a- 3), one kind thereof may be used singly, or two or more kinds thereof may be used in combination.

Examples of the isocyanate group- having (meth) acrylic compound (a- 4) include 2- (meth) acryloyloxyethylisocyanate, 3- (meth) acryloyloxypropylisocyanate, 4- (meth) acryloyloxybutylisocyanate, 5- (meth) acryloyloxypentylisocyanate, 6- (meth) acryloyloxyhexylisocyanate, 2- (2- (meth) acryloyloxyethyl) oxyethylisocyanate, 3- (meth) acryloyloxyphenylisocyanate and 4- (meth) acryloyloxyphenylisocyanate. Regarding these isocyanate group- having (meth) acrylic compounds (a- 4), one kind thereof may be used singly, or two or more kinds thereof may be used in combination.

Examples of the other ethylenic unsaturated monomer (a-5) copolymerizable with the above (meth)acrylic compounds include:

alkyl (meth) acrylates such as methyl (meth) acrylate, ethyl (meth) acrylate, propyl (meth) acrylate, isopropyl (meth) acrylate, butyl (meth) acrylate, isobutyl (meth) acrylate, tert- butyl (meth) acrylate, pentyl (meth) acrylate, amyl (meth) acrylate, isoamyl (meth) acrylate, hexyl (meth) acrylate, octyl (meth) acrylate, isooctyl (meth) acrylate, 2- ethylhexyl (meth) acrylate, nonyl (meth) acrylate, decyl (meth) acrylate, isodecyl (meth) acrylate, dodecyl (meth) acrylate, lauryl (meth) acrylate, stearyl (meth) acrylate and isostearyl (meth) acrylate;
fluoroalkyl (meth) acrylates such as trifluoroethyl (meth) acrylate, tetrafluoropropyl (meth) acrylate, hexafluoroisopropyl (meth) acrylate, and octafluoropentyl (meth) acrylate;
alkoxyalkyl (meth) acrylates such as methoxyethyl (meth) acrylate, ethoxyethyl (meth) acrylate, and methoxybutyl (meth) acrylate;
polyethylene glycol (meth) acrylates such as ethoxydiethylene glycol (meth) acrylate, methoxypolyethylene glycol (meth) acrylate, and phenoxypolyethylene glycol (meth) acrylate;
polypropyleneglycol (meth) acrylates such as methoxypolypropylene glycol (meth) acrylate, ethoxypolypropylene glycol (meth) acrylate, and phenoxypolypropylene glycol (meth) acrylate;
cycloalkyl (meth) acrylates such as cyclohexyl (meth) acrylate, dicyclopentanyl (meth) acrylate, dicyclopentenyl (meth) acrylate, norbornyl (meth) acrylate, isobornyl (meth) acrylate, tricyclodecanyl (meth) acrylate, morpholinyl (meth) acrylate, tetrahydrofurfuryl (meth) acrylate, adamantyl (meth) acrylate, and methyladamantyl (meth) acrylate;
phenyl (meth) acrylate, biphenyl (meth) acrylate, naphthyl (meth) acrylate, benzyl (meth) acrylate, 4- hydroxyphenyl (meth) acrylate, caprolactone- modified mono- terminal (meth) acrylate, siloxane skeleton- having mono- terminal (meth) acrylate, styrene, and vinyltoluene. Regarding these ethylenic unsaturated monomers, one kind thereof may be used singly, or two or more kinds thereof may be used in combination.

The multifunctional thiol compounds used in combination for the synthesis of the polymers are compounds having two or more mercapto groups in one molecule, such as ethylene glycol bis (3- mercaptopropionate), ethylene

glycol bis (3- mercaptobutylate), butanediolbis (3- mercaptopropionate), butanediolbis (3- mercaptobutylate), hexanediolbis (3- mercaptopropionate), hexanediolbis (3- mercaptobutylate), diethylene glycol bis (3- mercaptopropionate), diethylene glycol bis (3- mercaptobutylate), trimethylolpropanetris (3- mercaptopropionate), trimethylolpropanetris (3- mercaptobutylate), pentaerythritoltetrakis (3- mercaptopropionate), pentaerythritoltetrakis (3- mercaptobutylate), dipentaerythritolhexa (3- mercaptopropionate), dipentaerythritolhexa (3- mercaptobutylate), tris (2- hydroxyethyl) isocyanuratetris (3- mercaptopropionate) tri s (2- hydroxyethyl) isocyanuratetris (3- mercaptobutylate), ditrimethylolpropanetetrakis (3- mercaptopropionate), ditrimethylolpropanetetrakis (3- mercaptobutylate) tris (2- hydrox yethyl) isocyanuratetris (3- mercaptopropionate), and tris (2- hydroxyethyl) isocyanuratetris (3- mercaptobutylate) . Of these, compounds having four mercapto groups in one molecule, such as pentaerythritoltetrakis (3- mercaptopropionate) and pentaerythritoltetrakis (3- mercaptobutylate) are preferable.

The amount of the multifunctional thiol compound used when synthesizing the copolymer (A), with respect to 100 parts by mass of unsaturated monomers used for the synthesis, is preferably 0.01 to 15 parts by mass, more preferably 0.1 to 10 parts by mass, still more preferably 1 to 5 parts by mass. By controlling the content proportion of the multifunctional thiol compound so as to fall within the above range, the resulting composition gives a cured film excellent in curability, scratch resistance, transparency and curability near coating film surface in ordinary air, and furthermore is excellent in storage stability. If the content proportion of the multifunctional thiol compound is too large, there may be problems with storage stability, and the freedom of designing the composition may be restricted and weathering resistance may be deteriorated.

The copolymerization reaction is performed desirably in an organic solvent in terms of reaction stability. The organic solvent is not particularly limited as long as being commonly used in copolymerization reaction of (meth)acrylic compounds, and examples thereof include ketones such as methyl ethyl ketone, acetone and methyl isobutyl ketone; esters such as methyl acetate, ethyl acetate and butyl acetate; aromatic compounds such as toluene and xylene; ethers such as diethyl ether and tetrahydrofuran; alcohols such as methanol, ethanol and isopropanol. Of these, methyl ethyl ketone and methyl isobutyl ketone are preferable. Regarding these organic solvents, one kind thereof may be used, or two or more kinds thereof may be used in combination.

The copolymerization reaction is performed at a temperature of 60°C to 120°C, preferably 70°C to 100°C, preferably under an inert gas atmosphere. In this copolymerization reaction, a polymerization initiator is employed. The polymerization initiator is not particularly limited as long as commonly used, the examples of which include azobisisobutyronitrile, azobis (2- methylbutyronitrile), azobisisobutyronitrile, 2, 2- azobis- (2, 4- dimethylvaleronitrile), dimethyl- 2, 2- azobis- (2- methylpropionate), and benzoyl peroxide. Examples of the polymerization methods include a method in which all the components are fed at a time before polymerization, and a method in which while respective components are continuously fed, polymerization is performed.

The above-described addition reaction is performed at a temperature of 50°C to 130°C, preferably 90°C to 120°C. In the case of the temperature of lower than 50°C, practically sufficient reaction rate may not be obtained. On the other hand, in the case of the temperature of higher than 130°C, thermal radical polymerization may cause the crosslinking of double bonds and generate gelation. The addition reaction is performed preferably under a molecular oxygen-containing gas atmosphere. The concentration of molecular oxygen is appropriately determined in view of safety. The addition reaction is performed preferably in the presence of a polymerization inhibitor such as hydroquinone, hydroquinone monomethyl ether and phenothiazine.

The addition reaction may involve the use of a catalyst in order to obtain sufficient reaction rate. In the case of the reaction between a glycidyl group and a carboxyl group, employable examples are ternary amines such as dimethylbenzylamine, triethylamine, tetramethylethylene diamine and tri-n-octylamine; quaternary ammonium salts such as tetramethylammonium chloride, tetramethylammonium bromide and tetrabutylammonium bromide; alkylureas such as tetramethylurea; alkylguanidines such as tetramethylguanidine; and ternary phosphines such as triphenylphosphine. Of these, triethylamine is preferable. In the case of the reaction between an isocyanate group and a hydroxyl group, dibutyltin dilaurate, tin octylate, tin chloride and the like are employable. Of these, dibutyltin dilaurate is preferable. Regarding the above catalysts, one kind thereof may be used singly, or two or more kinds thereof may be used in combination.

The copolymer (A) preferably has a double bond equivalent of 200 to 5, 000, more preferably 200 to 1, 000. If the double bond equivalent is less than 200, the curing of the composition of the present invention excessively proceeds, and the resulting cured coating film may undergo curling. On the other hand, if the double bond equivalent exceeds 5, 000, the cured coating film may not have sufficient surface hardness.

The double bond equivalent is defined as follows.

Double bond equivalent = [Mass (g) of all the unsaturated monomers used in the synthesis + Mass (g) of polymerization initiator used in the synthesis + Mass (g) of all the multifunctional thiol compounds used in the synthesis] /[Mol number of unsaturated monomers used to introduce unsaturated groups x Number of unsaturated groups of unsaturated monomers used to introduce unsaturated groups]

The copolymer (A) preferably has a glass transition temperature of 60°C to 100°C, more preferably 80°C to 100°C. If the glass transition temperature is lower than 60°C, the cured coating film may not have sufficient surface hardness. On

the other hand, if the glass transition temperature exceeds 100°C, bending resistance of the cured coating film may be reduced. In the present invention, the glass transition temperature (Tg) of the (meth) acrylic copolymer resin is a value calculated by using the following equation.

[Numeral 1]

$$100/Tg = W_1/Tg_1 + W_2/Tg_2 + \cdots + W_n/Tg_n$$

where $W_1$, $W_2$, ···, $W_n$ are each a mass percentage (% by mass) of each acrylic compound and ethylenic unsaturated monomer; and $Tg_1$, $Tg_2$, ···, $Tg_n$ are each a glass transition temperature (absolute temperature) of a homopolymer of each acrylic compound and ethylenic unsaturated monomer.

Regarding the glass transition temperature of the homopolymers employed for the above calculation, values described for example in Polymer Handbook can be used.

The copolymer (A) preferably has a weight average molecular weight of 5, 000 to 200,000, more preferably 7,000 to 120,000. If the weight average molecular weight is less than 5, 000, sufficient surface hardness may not be obtained. On the other hand, if the weight average molecular weight exceeds 200,000, solubility in a solvent and the like may be lowered to reduce workability.

The weight average molecular weight of the copolymer resin in the present invention is a value determined from measurement using gel permeation chromatography (Shodex SYS-11 manufactured by Showa Denko K.K.) under the following conditions at room temperature, followed by the conversion to polystyrene.

Column: KF-806L manufactured by Showa Denko K.K.

Column temperature: 40°C

Specimen: tetrahydrofuran solution with 0.2% by mass of the copolymer

Flow rate: 2 ml/min

Eluent: tetrahydrofuran

ii) Silica fine particles (B)

As the silica fine particles (B) used in the present invention (hereinafter also called the "component (B)"), those having an average particle diameter of 1 to 100 nm are suitably used. The use of those having an average particle diameter of less than 1 nm increases the viscosity of the resulting curable composition, limiting the content of the silica fine particles (B) in the curable composition, and deteriorating the dispersibility of the silica fine particles (B) in the curable composition, with a tendency of the cured product obtained by curing such a curable composition (hereinafter, also referred to simply as the "cured product") not having sufficient heat resistance. The use of those having an average particle diameter exceeding 100 nm may cause the cured product to have reduced appearance properties and mechanical properties.

The average particle diameter of the silica fine particles (B), in view of controlling the viscosity of the curable composition so as to be a suitable value, is more preferably 1 to 70 nm, still more preferably 5 to 50 nm. The average particle diameter of the silica fine particles (B) can be obtained as follows. The fine particles are observed with a high-resolution transmission electron microscope (H9000 manufactured by Hitachi, Ltd.), and an image of 100 particles is arbitrarily selected in an observed image of the fine particles and are averaged by a publicly known image data statistical processing method, to give a number average particle diameter defined as the average particle diameter.

The content of the silica fine particles (B) in the curable composition, with respect to 100 parts by mass of the copolymer (A), is preferably 5 to 1000 parts by mass; and in terms of the balance between the heat resistance and environmental resistance of the cured product and the viscosity of the curable composition, more preferably 30 to 800 parts by mass. If the content of the silica fine particles (B) is smaller than 5 parts by mass, sufficient hardness may not be imparted to the cured product, and if the cured product exceeds 1000 parts by mass, dispersibility may be impaired to make the molding of the cured product difficult.

The silica fine particles (B) are preferably used while dispersed in an organic solvent, in terms of its dispersibility in the curable composition.

Examples of the organic solvent include alcohols, ketones, esters and glycol ethers. In terms of the easiness of controlling the solvent amount, preferable are organic solvents including alcohol-based ones such as methanol, ethanol, isopropyl alcohol, butyl alcohol, n-propyl alcohol; and ketone-based ones such as methyl ethyl ketone and methyl isobutyl ketone.

As the silica fine particles (B), in addition to those that have not been surface-treated, those that have been surface-treated may be suitably used.

The silica fine particles (B) dispersed in an organic solvent may be produced by known method. Commercial products of silica fine particles, for example (product name: SNOWTEX IPA-ST (manufactured by Nissan Chemical Industries, Ltd.) may be used. Such silica fine particles, used as a raw material, may be surface-treated.

The silica fine particles (B) used in the present invention are preferably those obtained by surface-treating silica fine particles (B'), which are not surface-treated, with a silane compound (E). Examples of the silane compound (E) include a polymerizable unsaturated group-having silane compound (E1) and an aromatic ring-having silane compound (E2). Hereinafter, each of these silane compounds is described.

[Polymerizable unsaturated group-having silane compound (E1)]

The polymerizable unsaturated group-having silane compound (E1) used in the present invention is a silane compound having a (meth)acryloyl group or a (meth)acryloyloxy group. In particular, an unsaturated group-having silane compound represented by the general formula (7) may be suitably used.

[Chem. 19]

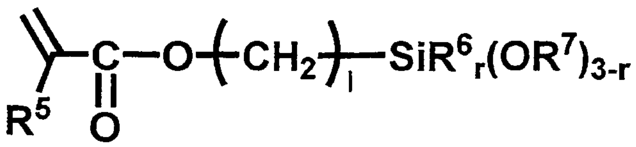

(7)

wherein $R^5$ is a hydrogen atom or a methyl group; $R^6$ is an alkyl group having 1 to 3 carbon atoms or a phenyl group; $R^7$ is a hydrogen atom or a hydrocarbon group having 1 to 10 carbon atoms; "r" is an integer of 0 to 2; and "l" is an integer of 1 to 6.

In terms of reducing the viscosity and also in terms of storage stability of the curable composition, preferably $R^5$ is a methyl group; preferably $R^7$ is a methyl group; preferable "l" is 3; and preferable "r" is 0.

The silane compound (E1) is used in order to reduce the viscosity of the curable composition, and allow the silica fine particles (B) to have improved dispersion stability in the curable composition, and also in order to reduce the curing shrinkage upon curing the curable composition, and provide the cured product with molding processability. In other words, in the case where the silica fine particles are not surface-treated with the polymerizable unsaturated group-having silane compound (E1), the resulting curable composition may have increased viscosity and have increased curing shrinkage upon being cured, and the resulting cured product may be brittle and undergo cracking.

Examples of the silane compound (E1) include γ- (meth) acryloxypropyldimethylmethoxysilane, γ- (meth) acryloxypropylmethyldimethoxysilane, γ- (meth) acryloxypropyldiethylmethoxysilane, γ- (meth) acryloxypropylethyldimethoxysilane, γ- (meth) acryloxypropyltrimethoxysilane, γ- (meth) acryloxypropyldimethylethoxysilane, γ- (meth) acryloxypropylmethyldiethoxysilane, γ- (meth) acryloxypropyldiethylethoxysilane, γ- (meth) acryloxypropylethyldiethoxysilane, and γ- (meth) acryloxypropyltriethoxysilane.

Of these, in terms of preventing the aggregation of the silica fine particles (B) in the curable composition, and reducing the viscosity of the curable composition and improving the storage stability of the curable composition, preferred are γ- (meth) acryloxypropyldimethylmethoxysilane, γ- (meth) acryloxypropylmethyldimethoxysilane, and γ- (meth) acryloxypropyltrimethoxysilane; and more preferred is γ- methacryloxypropyltrimethoxysilane. Regarding these, one kind thereof may be used singly, or two or more kinds thereof may be used in combination. These silane compound (E1) may be produced by known methods and are commercially available.

[Aromatic ring-having silane compound (E2)]

The aromatic ring-having silane compound (E2) used in the present invention is represented, for example by the following general formula (8).

[Chem. 20]

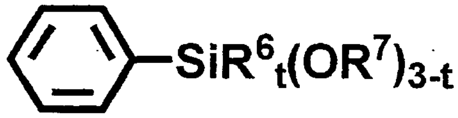

(8)

wherein $R^6$ and $R^7$ are synonymous with $R^6$ and $R^7$ in the general formula (7), respectively; and "t" is an integer of 0 to 2. The phenyl group present on the left side of the structure shown in the general formula (8) may have a substituent bonded thereto, as long as the effects of the present invention are not impaired.

In terms of reducing the viscosity of the curable composition and the storage stability of the curable composition, it is preferable that $R^7$ is a methyl group, and "t" is 0. If "t" is not 0, it is preferable that $R^6$ is a methyl group. The reaction between the silica fine particles and the aromatic ring-having silane compounds provides the surfaces of silica fine particles with hydrophobicity, improving the dispersibility of the silica fine particles in the above-described organic solvent, reducing the viscosity of the curable composition, and improving the storage stability of the curable composition.

Examples of the aromatic ring-having silane compound (E2) include phenyldimethylmethoxysilane, phenylmethyldimethoxysilane, phenyldiethylmethoxysilane, phenylethyldimethoxysilane, phenyltrimethoxysilane, phenyldimethylethoxysilane, phenylmethyldiethoxysilane, phenyldiethylethoxysilane, phenylethyldiethoxysilane, phenyltriethoxysilane, benzyldimethylmethoxysilane, benzylmethyldimethoxysilane, benzyldiethylmethoxysilane, benzylethyldimethoxysilane, benzyltrimethoxysilane, benzyldimethylethoxysilane, benzylmethyldiethoxysilane, benzyldiethylethoxysilane, benzylethyldiethoxysilane, and benzyltriethoxysilane.

In terms of reducing the viscosity of the curable composition, improving the storage stability and environmental resistance including the reduction in water absorption of the curable composition, preferred are phenyldimethylmethoxysilane, phenylmethyldimethoxysilane, phenyldiethylmethoxysilane, phenylethyldimethoxysilane, and phenyltrimethoxysilane; more preferred is phenyltrimethoxysilane. Regarding these, a single kind thereof may be used, or two or more kinds thereof may be used in combination. The silane compound (8) may be produced by known methods and is commercially available.

The amount of the polymerizable unsaturated group-having silane compound (E1) when surface-treating the silica fine particles, with respect to 100 parts by mass of the silica fine particles (B') not surface-treated, is preferably 0.1 part by mass to 60 parts by mass, more preferably 1 part by mass to 50 parts by mass, still more preferably 5 parts by mass to 40 parts by mass. If the amount of the polymerizable unsaturated group-having silane compound (E1) is less than 0.1 part by mass, the silica fine particles (B) may have deteriorated dispersibility in the curable composition and gelation may be caused. If the amount of the polymerizable unsaturated group-having silane compound (E1) exceeds 60 parts by mass, unreacted unsaturated groups are increased, which may reduce the hardness.

The amount of the aromatic ring-having silane compound (E2), with respect to 100 parts by mass of the silica fine particles (B') not surface-treated, is preferably more than 0 parts by mass and up to 40 parts by mass, more preferably more than 0 parts by mass and up to 30 parts by mass, still more preferably more than 0 parts by mass and up to 20 parts by mass. If the amount of the aromatic ring-having silane compound (E2) exceeds 40 parts by mass, surface modification amount that is not involved with radical polymerization reaction is increased, which may reduce the hardness.

When using both the polymerizable unsaturated group-having silane compound (E1) and the aromatic ring-having silane compound (E2), the total amount of the polymerizable unsaturated group-having silane compound (E1) and the aromatic ring-having silane compound (E2), with respect to 100 parts by mass of the silica fine particles (B'), is preferably 0.1 part by mass to 90 parts by mass, more preferably 1 part by mass to 75 parts by mass, still more preferably 5 parts by mass to 60 parts by mass. If the total amount of (E1) and (E2) is less than 0.1 part by mass, the silica fine particles (B) may have deteriorated dispersibility in the curable composition, and gelation may be caused. If the total amount of (E1) and (E2) exceeds 60 parts by mass, unreacted unsaturated group and surface modification amount that is not involved with radical polymerization reaction are increased, which may reduce the hardness.

iii) Reactive monomer (C)

The reactive monomer (C) (hereinafter also called the "component (C)") are compounds that can be polymerized or crosslinked by radicals generated from photo polymerization initiators upon active ray irradiation, or compounds that can be polymerized or crosslinked by heating. Copolymerizing the copolymer (A), the silica fine particles (B) and the reactive monomer (C) provides a crosslinked product, and cures the curable composition of the present invention. The reactive monomer (C), also called a reactive diluent, serves as controlling the viscosity and the curability of the composition, too. Examples of the reactive monomer (C) include compounds having one or more carbon-carbon double bonds, preferably two or more carbon-carbon double bonds, still more preferably three or more carbon-carbon double bonds,

with specific examples thereof being preferably (meth)acrylic acid esters, epoxy(meth)acrylates and urethane (meth) acrylates.

Specific examples of the (meth) acrylic acid esters include:

diacrylates such as ethyleneglycoldi (meth) acrylate, diethylene glycol di (meth) acrylate, triethylene glycol di (meth) acrylate, polyethylene glycol di (meth) acrylate, propylene glycol di (meth) acrylate, dipropylene glycol di (meth) acrylate, tripropylene glycol di (meth) acrylate, 1, 4- butanedioldi (meth) acrylate, neopentyl glycol di (meth) acrylate, 1, 6- hexanedioldi (meth) acrylate, tricyclodecanedi (meth) acrylate, and bisphenol A di (meth) acrylate;
multifunctional (meth) acrylates such as trimethylolpropanetri (meth) acrylate, pentaerythritoltri (meth) acrylate, pentaerythritoltetra (meth) acrylate, ditrimethylolpropanetetra (meth) acrylate, dipentaerythritolpenta (meth) acrylate, dipentaerythritolhexa (meth) acrylate, and tris (2- (meth) acryloyloxyethyl) isocyanurate; and
ethylene oxide-modified products thereof and propylene oxide-modified products thereof.

The epoxy (meth) acrylates are obtained by allowing unsaturated group- having carboxylic acids to react with known epoxy compounds. Specific examples of the epoxy compounds include glycidyl (meth) acrylate, glycidyl propyltrimethoxysilane, both- terminal glycidyl ethers of linear alcohols having 1 to 12 carbon atoms, diethylene glycol diglycidyl ether, tripropylene glycol diglycidyl ether , bisphenol A diglycidyl ether, ethylene oxide- modified bisphenol A diglycidyl ether, propylene oxide- modified bisphenol A diglycidyl ether, trimethylolpropane triglycidyl ether, pentaerythritol tetraglycidyl ether, hydrogenated bisphenol A diglycidyl ether, and glycerin diglycidyl ether. Examples of the unsaturated group- having carboxylic acid include (meth) acrylic acid, 2- (meth) acryloyloxyethyl succinic acid, and 2- (meth) acryloyloxy ethylhexahydrophthalic acid.

The above epoxy compounds and the unsaturated group-having carboxylic acids can be easily reacted with each other by known methods. For rapid progress of the reaction, compounds typified by phosphines such as triphenylphosphine are employable as a catalyst.

Particularly preferable epoxy (meth) acrylates are reaction products of glycidyl (meth) acrylate and (meth) acrylic acid, i. e., 2- hydroxy- 3- methacryloyloxypropylmethacrylate, and 2- hydroxy- 3- acryloyloxypropylmethacrylate.

The urethane (meth)acrylates are obtained, either by allowing unsaturated group-containing isocyanatess to react with known alcohol compounds, thiol compounds or amine compounds, or by urethanating known polyols and polyisocyanates in the excess of isocyanate groups, and after the completion of the urethanation reaction, allowing unsaturated group-having alcohol compounds, for example (meth) acryloyloxy group-containing alcohol, to react with the terminal isocyanates.

Specific examples of known alcohol compounds include (meth) acryloyloxy group- containing alcohols such as 2- hydroxyethylacrylate, ethylene glycol, 1, 3- propanediol, 1, 4- butanediol, 1, 6- hexanediol, glycerin, polyglycerin, tris (2- hydroxyethyl) isocyanurate, 1, 3, 5- trihydroxypentane, 1, 4- dithiane- 2, 5- dimethanoltricyclodecanediol, trimethylolpropane, pentaerythritol, ditrimethylolpropane, dipentaerythritol, norbornanedimethanol, polycarbonatediol, polysiloxanediol, bisphenol A, perfluoro alcohols, EO modified products thereof, PO modified products thereof, and caprolactone- modified products thereof.

As known thiol compounds, the thiol compounds (a-5) described above and the like can be mentioned.

On the other hand, examples of the unsaturated group- containing isocyanate compounds are, in addition to the isocyanate group- having unsaturated monomers (a- 4), 2, 2- bis (acryloyloxymethyl) ethylisocyanate, and 1, 1- bis (acryloyloxymethyl) methylisocyanate.

The content of the reactive monomer (C) in the curable resin composition, with respect to 100 parts by mass of the copolymer (A), is preferably 1 part by mass to 1000 parts by mass, more preferably 10 parts by mass to 800 parts by mass. If the content of the reactive monomer (C) is less than 1 part by mass, crosslinking density is reduced, which may lead to insufficient hardness. If the content of the reactive monomer (C) exceeds 1000 parts by mass, crosslinking density is increased, which may impair flexibility.

iv) Polymerization initiator (D)

Examples of the polymerization initiator (D) used in the present invention include radical-generating photo polymerization initiators and thermal polymerization initiators. These polymerization initiators may be used singly, or may be used in combination.

Examples of the photo polymerization initiators include benzophenone, benzoinmethyl ether, benzoinpropyl ether, diethoxyacetophenone, 1- hydroxy- phenylphenylketone, 2, 6- dimethylbenzoyldiphenyl phosphineoxide, 2, 4, 6- trimethylbenzoyldiphenyl phosphineoxide and diphenyl- (2, 4, 6- trimethylbenzoyl) phosphine oxide. Regarding these photo polymerization initiators, two or more kinds thereof may be used in combination.

In the curable composition of the present invention, the content of the photo polymerization initiator in the curable composition is such an amount as appropriately cures the curable composition and is preferably 0.1 part by

mass to 50 parts by mass, more preferably 1 part by mass to 8 parts by mass, with respect to 100 parts by mass of the total amount of the curable components, i.e., the component (A), the component (B) and the component (C). If the amount of the photo polymerization initiator is less than 0.1 part by mass, curing may be insufficient. If the amount of the photo polymerization initiator exceeds 50 parts by mass, the curable composition may have reduced storage stability, may be colored, or may be crosslinked so rapidly in crosslinking for obtaining a cured product that problems such as cracking may occur in crosslinking. In addition, an emission gas component in high-temperature treatment is increased, which may contaminate apparatus.

Examples of the thermal polymerization initiators include benzoylperoxide, diisopropylperoxycarbonate, t-butylperoxy (2- ethylhexanoate), 1, 1- di (t- hexylperoxy) cyclohexane, 1, 1- di (t- butylperoxy) cyclohexane, 2, 2- di (4, 4- di- (t- butylperoxy) cyclohexyl) propane, t- hexylperoxopropylmonocarbonate, t- butylperoxymaleic acid, t-butylperoxy3, 5, 5- trimethylhexanoate, t- butylperoxylaurate, t- butylperoxopropylmonocarbonate, t- butylperoxy- 2-ethylhexylmonocarbonate, t- hexylperoxybenzoate, 2, 5- dimethyl- 2, 5- di (benzoylperoxy) hexane, t- butylperoxyacetate, 2, 2- di (t- butylperoxy) butane, t- butylperoxybenzoate, n- butyl- 4, 4- di (t- butylperoxy) valerate, di (2- t- butylperoxyisopropyl) benzene, dicumylperoxide, di- t- butylperoxide, 2, 5- dimethyl- 2, 5- di (t- butylperoxy) hexane, t- butylcumylperoxide, di- t- hexylperoxide, p- menthanehydroperoxide, 2, 5- dimethyl- 2, 5- di (t- butylperoxy) hexane- 3, diisopropylbenzenehydroperoxide, 1, 1, 3, 3- tetramethylbutylhydroperoxide, cumene hydroperoxide, t- butylhydroperoxide, 2, 3-dimethyl- 2, 3- diphenylbutane, 2, 2- azobis (4- methoxy- 2, 4- dimethylvaleronitrile), 2, 2'- azobis (2, 4- dimethylvaleronitrile), dimethyl- 2, 2'- azobis (2- methylpropionate), 2, 2'- azobis (2- methylbutyronitrile), 1, 1'- azobis (cyclohexane- 1-carbonitrile 2, 2'- azobis (N- (2- propenyl)- 2- methylpropionamide, 1- ((1- cyano- 1- methylethyl) azo) formamide, 2, 2'-azobis (N- butyl- 2- methylpropionamide), and 2, 2'- azobis (N- cyclohexyl- 2- methylpropionamide) .

The content of the thermal polymerization initiator in the curable resin composition is the same as described above with regard to the photo polymerization initiator. The photo polymerization initiators and the thermal polymerization initiators may be used in combination.

In the curable resin composition of the present invention, preferable mass percentage of the component (A), of the component (B) and of the component (C) with respect to the whole of the curable composition are such that the mass percentages of the component (A) is 5 % by mass to 60 % by mass; the mass percentages of the component (B) is 30% by mass to 60% by mass; and the mass percentages of the component (C) is 10% by mass to 60% by mass. If the mass percentage of the component (A) is too large, crosslinking density is insufficient, which may not provide sufficient hardness. If the mass percentage of the component (A) is too small, curing shrinkage becomes larger, which causes cracking or warpage of the cured film. If the mass percentage of the component (B) is too large, dispersibility is deteriorated, which may cause the gelation of the curable composition, and inorganic properties are strengthened, which may cause the cured film to be brittle. The mass percentage of the component (B) that is too small may not contribute to decreasing the warpage of the cured film, and may not achieve sufficient hardness. If the mass percentage of the component (C) is too large, crosslinking more than necessary may proceeds, which may induce the warpage of the cured film, and unreacted double bond is increased, which may impair optical properties. If the mass percentage of the component (C) is too small, crosslinking density is decreased, which may not achieve sufficient hardness.

v) Reactive oligomer (F)

As the reactive oligomer (F) used in the present invention, known reactive oligomers may be employed as needed, as long as the effects of the present invention are not impaired. The curable composition of the present invention, by containing the reactive oligomer (F), is advantageous in terms of providing a cured product with toughness without reducing the hardness.

Specific examples of the reactive oligomer (F) include urethane acrylates. Examples of commercially available urethane acrylates include products manufactured by The Nippon Synthetic Chemical Industry Co., Ltd. including UV-1600B, SHIKOH UV-1700B, SHIKOH UV-6300B, SHIKOH UV-7600B and SHIKOH UV-7640B, products manufactured by DAICEL-CYTEC Company LTD. including EBECRYL 1290K, KRM8200, EBECRYL 5129 and EBECRYL 8301; products manufactured by KYOEISHA CHEMICAL Co., Ltd. including UA-306H, UA-306T, UA-306I and UA-510H; products manufactured by Sartomer including CN-968, CN9006, CN975 and CN997; products manufactured by Shin-Nakamura Chemical Co., Ltd. including U-6HA, U-15HA, UA-100H, U-4HA, U-6LPA, UA-32P, U-324A and U-4H; products manufactured by Negami Chemical Industrial Co., Ltd. including ArtResin UN-3320HA, ArtResin UN-3320HB, ArtResin UN-3320HC, ArtResin UN-3320HS, ArtResin UN-904, ArtResin UN-901T, ArtResin UN-905 and ArtResin UN-952. These urethane acrylates have high hardness and less curing shrinkage than hexafunctional acrylic monomers.

In terms of reducing curing shrinkage and increasing reactivity, hyper-branch oligomers or dendrimers are effective. The hyper-branch oligomers and dendrimers mentioned herein means three-dimensionally branched multi-branched compounds: those with low regularity are called hyper-branch oligomers, and those with high regularity are called dendrimers. Specific examples of commercially available products are CN-2302, CN-2303 and CN-2304 manufactured by Sartomer.

In the curable composition of the present invention, the content of the reactive oligomer (F) in the curable composition, with respect to 100 parts by mass of the copolymer (A), is preferably 0.1 part by mass to 500 parts by mass, more preferably 1 part by mass to 100 parts by mass. If the content of the reactive oligomer (F) is less than 0.1 part by mass, the performance of the reactive oligomers, i.e., high hardness and low shrinkage, may not be imparted sufficiently. If the content of the reactive oligomer (F) exceeds 500 parts by mass, there may be adverse effects on dispersion of the silica fine particles and the compatibility with other compositions.

vi) Additive (G)

The curable resin composition of the present invention may contain optional additives as needed. Examples of employable additives include fillers (G1), dyes, pigments, leveling agents, ultraviolet ray absorbents, light stabilizers, defoaming agents, dispersants, thixotropy-imparting agents, multifunctional thiol compounds (G2) and multifunctional isocyanate compounds (G3). The addition amount of these additives, with respect to 100 parts by mass of the curable composition, is usually 0.01 part by mass to 10 parts by mass.

In the case where a hard coat layer is formed from the curable resin composition of the present invention, particularly in order to provide the hard coat layer with antiblocking properties, it is effective to use, in the curable composition, the fillers (G1), the multifunctional thiol compounds (G2) and the multifunctional isocyanate compounds (G3). When incorporating the fillers (G1), the use of silica fine particles having a particle diameter of 100 nm to 10 μm is preferable. By such silica fine particles being contained in the curable composition, the hard coat layer has a sea-island structure, and the hard coat layer can be provided with antiblocking properties.

In the case where the multifunctional thiol compound (G2) is used as a method for imparting antiblocking properties, thiol compounds to be employed are not particularly limited, and any multifunctional thiol compounds may be used. Specific examples are the compounds listed in the above-described (a-5), but are not limited thereto. By adding the multifunctional thiol compound to the curable resin composition, for example at a heating step such as a solvent-drying step, the polymerization reaction or 1,4-Micheal addition reaction originating from thiol-ene reaction that occurs between unsaturated groups and mercapto groups allows the crosslinking of the composition to proceed to some degree, thereby providing the hard coat layer with antiblocking properties. In order to impart this effect, in terms of steric hindrance, it is advantageous that as the multifunctional thiol compound (G2), a thiol having a primary mercapto group is used. If it is desired that pot life is imparted to the composition, it is preferable that a thiol having a secondary mercapto group is used.

In the case where the multifunctional isocyanate compound (G3) is used as a method for imparting antiblocking properties, isocyanate compounds to be employed are not particularly limited, and any multifunctional isocyanate compounds may be used. Specific examples are hexamethylene diisocyanate, isophorone diisocyanate, xylylenediisocyanate, tolylenediisocyanate, phenylenediisocyanate, methylenebis (4, 1- phenylene) =diisocyanate, hydrogenated methylenebis (4, 1- phenylene) =diisocyanate, tris (2- isocyanatoethyl) isocyanurate, and copolymers containing the isocyanate group- having (meth) acrylic compound (a- 4), but are not limited thereto.

By using the multifunctional isocyanate compound (G3) in combination, for example at a heating step such as a solvent-drying step, the condensation reaction with an active hydrogen-having substituent in the curable composition allows the crosslinking of the curable composition to proceed to some degree, to provide the hard coat layer with antiblocking properties. However, if the curable composition does not contain an amino group, a hydroxyl group, a mercapto group, a carboxyl group or other substituents capable of reacting with an isocyanate, there is a possibility that sufficient antiblocking properties are not obtained. In order to enhance the pot life of the composition, isocyanate group-protecting block isocyanate compounds may be used.

When the curable composition of the present invention is applied on an optical film, a target, the curable composition can be cured in an extremely short period of time, finally by heating or applying an active energy ray such as ultraviolet ray or electron ray. The application amount of the curable composition is such an amount that the dried film thickness is 5 μm to 50 μm. Examples of light source employed in ultraviolet ray irradiation are a high-pressure mercury lamp, an ultra-high-pressure mercury lamp, a carbon arc lamp, a xenon lamp and a metal hydride lamp. Irradiation time, which varies depending on the type of light sources, the distance between a light source and the surface to be coated and other conditions, is tens of seconds at longest, usually several seconds. Usually, an irradiation source with a lamp output of about 80 $W/cm^2$ to 300 $W/cm^2$ is employed. In the case of electron ray irradiation, an electron ray having energy within the range of 50 KeV to 1, 000 KeV is used, and the irradiation quantity of 2 Mrad to 5 Mrad is preferable. The active energy ray irradiation may be followed by heating treatment to promote curing.

When the curable composition of the present invention is applied on an article (for example, a plastic film), the application method is not particularly limited, and examples of employable methods include spraying, airless spraying, air spraying, roll coating, bar coating and gravure method. Of these, in terms of aesthetic properties, cost, workability and the like, gravure method is most preferably used. Application procedure may be performed by in-line coating, in which coating is carried out during the production process of plastic films, or may be performed by off-line coating, in

which the coating of an already-prepared article is carried out in a separate process. In terms of production efficiency, off-line coating is preferable.

The cured coating film obtained by heating or irradiating the curable composition of the present invention with an active energy ray are widely applicable for uses requiring low curing shrinkage, high surface hardness, high scratch resistance, and in particular optical uses requiring high transparency.

## EXAMPLES

Hereinafter, the present invention is described with reference to Examples, but the present invention is not limited by these Examples.

(1) Synthesis of Copolymer (A)

[Production Example 1]:

Synthesis of copolymer having an unsaturated group at the side chains (P-1)

A reaction container equipped with a thermometer, a stirring blade, a reflux condenser and a dropping funnel was charged with 115. 0 parts by mass of a mixture solution consisting of propylene glycol monomethyl ether and methyl ethyl ketone at 50%/ 50% (hereinafter, abbreviated as PGME/MEK mixture solution), and 3.0 parts by mass of pentaerythritoltetrakis (3- mercaptopropionate) (PEMP manufactured by SC Organic Chemical Co., Ltd.), and then the mixture was heated to about 80°C. Thereto, 97.6 parts by mass of a monomer solution containing methyl methacrylate (hereinafter, abbreviated as MMA), 72.6 parts by mass of acrylic acid (hereinafter, abbreviated as Aa), 43.1 parts by mass of cyclohexane methacrylate (hereinafter, abbreviated as CHMA), 13.6 parts by mass of 2- ethylhexyl methacrylate (hereinafter, abbreviated as 2EHMA), 0.9 part by mass of azobisisobutyronitrile (hereinafter, abbreviated as AIBN), 0.7 part by mass of 2- ethylhexylthioglycolate (hereinafter, abbreviated as 2- EHTG) and 125.0 parts by mass of PGME/MEK mixture solution were dropped over a period of 2 hours. 1 hour after the completion of the dropping, 0.7 part by mass of AIBN and 10.0 parts by mass of the PGME/MEK mixture solution were added, and stirred at about 90°C for 2 hours, to perform aging. After cooling to 80°C, 0.2 part by mass of methoquinone, 0.2 part by mass of triethylamine and 22.7 parts by mass of glycidyl methacrylate (hereinafter, abbreviated as GMA) serving as an addition monomer were added and stirred at 80°C for 9 hours. The mixture was diluted with the PGME/MEK mixture solution such that the nonvolatile contents would be 50% by mass, and the resultant was cooled, to obtain a MEK/ PGME mixture solution of a copolymer represented by the general formula (1) (hereinafter, referred to as the copolymer (P- 1) ) (double bond equivalent: 820, glass transition temperature: 92°C, weight average molecular weight: 78, 000) . The glass transition temperature and the weight average molecular weight are values measured by the above- described methods.

[Production Examples 2 to 6]

The same procedure was performed as in Production Example 1, except that components employed and the proportion of the components employed were changed as indicated in Table 1, to obtain copolymers having an unsaturated group at the side chains (P-2) to (P-6). In Table 1, MAa represents methacrylic acid, and 4-HBAGE represents 4-hydroxybutylacrylate glycidyl ether. MAa was added instead of Aa, and 4-HBAGE was added instead of GMA.

[Comparative Production Example 1]:

Synthesis of copolymer having an unsaturated group at the side chains (P-7)

The same procedure was performed as in Production Example 1, except that pentaerythritoltetrakis (3- mercaptopropionate) (PEMP manufactured by SC Organic Chemical Co., Ltd.) used in Production Example 1 was not used, to obtain a MEK solution of the copolymer having an unsaturated group at the side chains (P- 7) (double bond equivalent: 820, glass transition temperature: 92°C, weight average molecular weight: 93, 000) .

(2) Synthesis of Silica fine particles dispersion liquid (B)

[Production Example 7]:

Synthesis of silica fine particles dispersion liquid (M-1)

A separable flask was charged with 100 parts by mass of isopropyl alcohol dispersion-type colloidal silica (silica content: 30% by mass, average particle diameter: 10 to 20 nm, product name: SNOWTEX IPA-ST; manufactured by Nissan Chemical Industries, Ltd.), and to the separable flask, 9 parts by mass of γ-methacryloxypropyltrimethoxysilane was added and the mixture was stirred. Further, to this mixture liquid, 3.1 parts by mass of 0.1825% by mass of an HCl solution was added, and stirred at room temperature for 24 hours, to perform the surface-treatment of silica fine particles. As a result, silica fine particles dispersion liquid (M-1) was obtained. The disappearance of γ-methacryloxypropyltrimethoxysilane through hydrolysis was confirmed by gas chromatography (manufactured by Agilent Technologies Japan, Ltd., Model: 6850). The γ-methacryloxypropyltrimethoxysilane concentration was measured by internal standard method in a hydrogen flame ionization detector, using a nonpolar column DB-1 (manufactured by J&W Technology, Ltd.), at a temperature of 50 to 300°C, raising temperature at a rate of 10°C/min, and using He as a carrier gas at a flow rate of 1.2 cc/min. γ-methacryloxypropyltrimethoxysilane disappeared 8 hours after from adding the above HC1 solution.

Then, with a rotary evaporator, solvent substitution was performed from isopropyl alcohol to methyl isobutyl ketone (hereinafter, abbreviated as MIBK), and diluting with MIBK was performed such that the nonvolatile contents would be finally 45% by mass, to obtain a silica fine particles (M- 1) dispersion liquid (45% MIBK dispersion liquid) .

(3) Preparation of Curable resin composition

[Production Example 8]:

Preparation of curable resin composition C-1

16.6 parts by mass of the copolymer (P-1) 50% MEK solution synthesized in Production Example 1, 144.4 parts by mass of the silica fine particles (M-1) dispersion liquid synthesized in Production Example 2, 41.7 parts by mass of dipentaerythritol hexaacrylate (product name: KAYARAD DPHA manufactured by NIPPON KAYAKU Co., Ltd.) were mixed. Further, 4.6 parts by mass of 1-hydroxycyclohexyl phenyl ketone (product name: IRG184 manufactured by Ciba Specialty Chemicals) as a photo polymerization initiator was added, and further 311 parts by mass of MIBK was added, so that the solid contents became 30%. This mixture liquid was stirred by using a stirrer with light shielded at room temperature for 24 hours, to obtain a curable resin composition C-1.

[Production Examples 9 to 19, 22 to 28]:

Preparation of curable resin compositions C-2 to C-12, C-15 to C-21

The same procedure was performed as in Production Example 8, except that the formulation of respective components is as indicated in Table 2 and Table 3, to prepare any of curable resin compositions C-2 to C-12a and C-15 to C-21.

[Production Example 20]:

Preparation of curable resin composition C-13

The same procedure was performed as in Production Example 9, except that the formulation of respective components was changed as indicated in Table 3, and together with components including the copolymer (P- 1), pentaerythritoltetrakis- (3- mercaptobutylate) (hereinafter, also called PE1) was incorporated at the formulation indicated in Table 3, to prepare a curable resin composition C- 13.

[Production Example 21]:

Preparation of curable resin composition C-14

The same procedure was performed as in Production Example 9, except that the formulation of respective components was changed as indicated in Table 3, and together with components including the copolymer (P- 1), tris(2- isocyanatoethyl) isocyanurate (hereinafter, also called TIEI) was incorporated at the formulation indicated in Table 3, to prepare a curable resin composition C- 14.

(4) Preparation of Hard coat film

[Example 1]

The curable resin composition (C-1) was applied such that the dry coating film would have a thickness of 8 μm on a TAC (triacetylcellulose) film (FUJITAC (film thickness: 40 μm) manufactured by Fuji Photo Film Co., Ltd.), and then was dried at 70°C for 1 min, and thereafter was exposed under $N_2$ atmosphere with a UV irradiator (mercury lamp) to an accumulated irradiation intensity of 200 mJ/cm$^2$, to be cured, thereby providing a hard coat film.
Using the resultant hard coat film, performance such as adhesion was evaluated. Results are set forth in Table 4. Evaluation methods are described later.

[Examples 2 to 8 and Comparative Examples 1 and 2]

In the same manner as in Example 1 except for changing the curable resin composition of Example 1 to any of C-2 to C-10, a hard coat film was obtained, and its performance was evaluated. Results are set forth in Table 4. Evaluation methods are described later.

[Example 9]

The curable resin composition (C-11) was applied such the dry coating film would have a thickness of 6 μm on a PET film (Lumirror 50-T60 available from Panac Corporation (film thickness 50 μm)), and then was dried at 100 °C for 1 min, to obtain a UV-unexposed sample. Using this UV-unexposed sample, antiblocking properties and shape-following properties were evaluated. The UV-unexposed film was exposed under an air atmosphere with a UV irradiator (mercury lamp) to an accumulated irradiation intensity of 1000 mJ/cm$^2$, to be cured, thereby obtaining a hard coat film. Using the resultant hard coat film, performance such as pencil hardness was evaluated. Results are set forth in Table 5. Evaluation methods are described later.

[Examples 10 to 17 and Comparative Examples 3 and 4]

In the same method as in Example 9 except for changing the curable resin composition of Example 9 to any of C-11 to C-21, a hard coat film was obtained, and its performance was evaluated. Results are set forth in Table 5. Evaluation methods are described later.

(5) Evaluation methods of Hard coat film

(a) Evaluation of Curling shrinkage

From the hard coat film, a 10 cm-square test piece was prepared. The two sides facing each other of the test piece lifted and warped. The distance between the lifting ends of the test piece was measured. The distance obtained was subtracted from 10 cm to obtain a length, and the ratio of this length to 10 cm was defined as curing shrinkage. The lower ratio represents lower curing shrinkage. In the case where the test piece turned 360 degrees to be a roll-shape, the numerical value is indicated with parenthesis in Table 4. In this case, the numerical value indicated is the diameter of the roll.

(b) Evaluation of Adhesion

The cured coating film surface of the hard coat film was slit with an interval of 1 mm, to create 100 grids each being 1 mm$^2$. Thereon, Sellotape (registered trade name) was attached, and peeled off at a time, and evaluation was made based on the following criteria. The number of grids retaining adhesion out of 100 grids was counted. When 100 grids retained adhesion out of 100 grids, adhesion is indicated as 100/100.
AA: No peeling was observed (= 100/100).
BB: Peeling was observed.

(c) Evaluation of Pencil hardness

In accordance with the method described in JIS K5400, with a surface-property tester (manufactured by Shinto Scientific Co. , Ltd.), and a pencil for hardness measurement (manufactured by Mitsubishi Pencil Co., Ltd.), pencil hardness was measured in accordance with JIS K5400. The pencil hardness was measured five times. The number "n" of samples evaluated as passing this test is indicated as "n/5".

(d) Evaluation of Scratch resistance

A load of 175 g/cm$^2$ was applied on a steel wool (#0000) and with this steel wool, the cured coating film surface of the hard coat film was scratched by reciprocating ten times. Whether there was scratch or not was visually observed, and evaluation was made based on the following criteria.
AA: No scratch was observed.
BB: Scratch was observed.

(e) Evaluation of Total light transmittance

With a haze meter (NDH2000) manufactured by NIPPON DENSHOKU INDUSTRIES CO., LTD., in accordance with JIS K7361, total light transmittance (%) was measured.

(f) Evaluation of Haze

With a haze meter (NDH2000) manufactured by NIPPON DENSHOKU INDUSTRIES CO., LTD., in accordance with JIS K7361, haze(%) was measured.

(g) Evaluation of Antiblocking properties

The UV-unexposed sample was held with a blocking tester (manufactured by TESTER SANGYO CO., LTD.) at a temperature of 50 °C, at a load of 1 Kg/cm$^2$ for 12 hours to evaluate its antiblocking properties.
AA: No peeling was observed.
BB: Peeling was observed.

(h) Evaluation of Shape-following properties

The UV-unexposed sample was used. With a Tensilon tensile tester, the shape-following properties of the dry coating film with respect to a substrate was evaluated. The numeral indicated in Table 5 is a ratio of an extendable length to the original length.
[Table 1]

Table 1

| | | Formulation (part by mass) | | | | | | |
|---|---|---|---|---|---|---|---|---|
| | | Prod. Ex.1 | Prod. Ex.2 | Prod. Ex.3 | Prod. Ex.4 | Prod. Ex.5 | Prod. Ex.6 | Comp. Prod. Ex. 1 |
| | | P-1 | P-2 | P-3 | P-4 | P-5 | P-6 | P-7 |
| Unsaturated monomer | MMA | 97.6 | 105.6 | 105.6 | 88.0 | 61.9 | 97.4 | 97.6 |
| | MAa | | 86.4 | 86.4 | 72.0 | 89.1 | 79.7 | |
| | Aa | 72.6 | | | | | | 72.6 |
| | CHMA | 43.1 | | | | | | 43.1 |
| | 2EHMA | 13.6 | | | | | | 13.6 |

(continued)

| | | Formulation (part by mass) | | | | | | |
|---|---|---|---|---|---|---|---|---|
| | | Prod. Ex.1 | Prod. Ex.2 | Prod. Ex.3 | Prod. Ex.4 | Prod. Ex.5 | Prod. Ex.6 | Comp. Prod. Ex. 1 |
| | | P-1 | P-2 | P-3 | P-4 | P-5 | P-6 | P-7 |
| Unsaturated monomer as addition monomer | GMA | 22.7 | 57.6 | 57.6 | 89.6 | 99.7 | | 22.7 |
| | 4-HBAGE | | | | | | 72.6 | |
| Solvent | MEK | 115 | 115 | 115 | 115 | 115 | 115 | 115 |
| | PGME | 125 | 125 | 125 | 125 | 125 | 125 | 125 |
| Thiol compound | PEMP | 3.0 | 2.5 | | 2.1 | 2.0 | 2.3 | |
| | DPMP | | | 2.5 | | | | |
| Chain transfer agent | 2-EHTG | 0.7 | 0.6 | 0.6 | 0.5 | 0.5 | 0.5 | 0.7 |
| Polymerization inhibitor | Methoquinone | 0.2 | 0.6 | 0.6 | 0.6 | 0.6 | 0.6 | 0.2 |
| Addition catalyst | Triethylamine | 0.2 | 0.6 | 0.6 | 1.0 | 1.1 | 0.7 | 0.2 |
| Polymerization initiator | AIBN | 1.6 | 1.3 | 1.3 | 1.1 | 1.1 | 1.2 | 1.6 |

[Table 2]

Table 2

| | | Formulation (part by mass) | | | | | | | | | |
|---|---|---|---|---|---|---|---|---|---|---|---|
| | | Prod. Ex.8 | Prod. Ex.9 | Prod. Ex.10 | Prod. Ex.11 | Prod. Ex.12 | Prod. Ex.13 | Prod. Ex.14 | Prod. Ex.15 | Prod. Ex.16 | Prod. Ex.17 |
| Curable resin composition | | C-1 | C-2 | C-3 | C-4 | C-5 | C-6 | C-7 | C-8 | C-9 | C-10 |
| Copolymer (A) | P-1 | 8.3 | 10 | 11.7 | | | | | | | |
| | P-2 | | | | 11.7 | | | | | | |
| | P-3 | | | | | 11.7 | | | | | |
| | P-4 | | | | | | 11.7 | | | 16.7 | |
| | P-5 | | | | | | | 11.7 | | | |
| | P-6 | | | | | | | | 11.7 | | |
| | P-7 | | | | | | | | | | 11.7 |
| Reactive monomer (C) | DPHA | 41.7 | 50 | 58.3 | 58.3 | 58.3 | 58.3 | 58.3 | 58.3 | 83.3 | 58.3 |
| Silica fine particles (B) | M-1 | 65 | 52 | 39 | 39 | 39 | 39 | 39 | 39 | | 39 |
| Polymerization initiator (D) | IRG184 | 4.6 | 4.48 | 4.36 | 4.36 | 4.36 | 4.36 | 4.36 | 4.36 | 4 | 4.36 |
| Solvent | MEK | 8.3 | 10 | 11.7 | 11.7 | 11.7 | 11.7 | 11.7 | 11.7 | 16.7 | 11.7 |
| | MIBK | 390.4 | 378.3 | 366.2 | 366.2 | 366.2 | 366.2 | 366.2 | 366.2 | 330.0 | 366.2 |

[Table 3]

Table 3

| | | Formulation (part by mass) | | | | | | | | | | |
|---|---|---|---|---|---|---|---|---|---|---|---|---|
| | | Prod. Ex. 18 | Prod. Ex. 19 | Prod. Ex. 20 | Prod. Ex. 21 | Prod. Ex. 22 | Prod. Ex. 23 | Prod. Ex. 24 | Prod. Ex. 25 | Prod. Ex. 26 | Prod. Ex. 27 | Prod. Ex. 28 |
| Curable resin composition | | C-11 | C-12 | C-13 | C-14 | C-15 | C-16 | C-17 | C-18 | C-19 | C-20 | C-21 |
| Copolymer (A) | P-1 | 42 | 36 | 36 | 36 | | | | | | | |
| | P-2 | | | | | 36 | | | | | | |
| | P-3 | | | | | | 36 | | | | | |
| | P-4 | | | | | | | 36 | | | 60 | |
| | P-5 | | | | | | | | 36 | | | |
| | P-6 | | | | | | | | | 36 | | |
| | P-7 | | | | | | | | | | | 36 |
| Reactive monomer (C) | DPHA | 18 | 24 | 24 | 24 | 24 | 24 | 24 | 24 | 24 | 40 | 24 |
| Silica fine particles (B) | M-1 | 40 | 40 | 40 | 40 | 40 | 40 | 40 | 40 | 40 | | 40 |
| Additive | PE-1 | | | 1 | | | | | | | | |
| | TIEI | | | | 1 | | | | | | | |
| Polymerization initiator (D) | IRG184 | 4 | 4 | 4 | 4 | 4 | 4 | 4 | 4 | 4 | 4 | 4 |
| Solvent | MEK | 42 | 36 | 36 | 36 | 36 | 36 | 36 | 36 | 36 | 60 | 36 |
| | MIBK | 304.7 | 310.7 | 314.0 | 314.0 | 310.7 | 310.7 | 310.7 | 310.7 | 310.7 | 286.7 | 310.7 |

[Table 4]

Table 4

| | | Ex.1 | Ex.2 | Ex.3 | Ex.4 | Ex.5 | Ex.6 | Ex.7 | Ex.8 | Comp. Ex.1 | Comp. Ex.2 |
|---|---|---|---|---|---|---|---|---|---|---|---|
| Curing composition | | C-1 | C-2 | C-3 | C-4 | C-5 | C-6 | C-7 | C-8 | C-9 | C-10 |
| Evaluation | Curing shrinkage (%) | 34 | 80 | 83 | 79 | (32 mm) | 82 | (32 mm) | 95 | (23.5mm) | 65 |
| | Adhesion | 100/100 | 100/100 | 100/100 | 100/100 | 100/100 | 100/100 | 100/100 | 100/100 | 100/100 | 100/100 |
| | Pencil hardness | 2H 5/5 | 2H 4/5 | 2H 5/5 | 2H 5/5 | 2H 5/5 | 2H 5/5 | 2H 5/5 | 2H 4/5 | 2H 2/5 | 2H 1/5 |
| | Scratch resistance | AA | AA | AA | AA | AA | AA | AA | AA | BB | AA |
| | Total light transmittance (%) | 92.9 | 92.8 | 92.8 | 92.8 | 92.8 | 92.7 | 92.8 | 92.7 | 92.7 | 92.4 |
| | Haze | 0.60 | 0.34 | 0.75 | 0.34 | 0.43 | 0.33 | 0.37 | 0.39 | 0.26 | 1.07 |

[Table 5]

Table 5

| | | Ex.9 | Ex.10 | Ex.11 | Ex.12 | Ex.13 | Ex.14 | Ex.15 | Ex.16 | Ex.17 | Comp. Ex.3 | Comp. Ex.4 |
|---|---|---|---|---|---|---|---|---|---|---|---|---|
| Curing composition | | C-11 | C-12 | C-13 | C-14 | C-15 | C-16 | C-17 | C-18 | C-19 | C-20 | C-21 |
| Evaluation | Antiblocking properties | AA | AA | AA | AA | AA | AA | AA | AA | AA | BB | AA |
| | Pencil hardness | 2H 1/5 | 2H 2/5 | 2H 1/5 | 2H 0/5 | 2H 0/5 | 2H 3/5 | 2H 5/5 | 2H 5/5 | 2H 4/5 | 2H 0/5 | 2H 0/5 |
| | Scratch resistance | AA | AA | AA | AA | AA | AA | AA | AA | AA | BB | AA |
| | Shape-following properties | >100 | >100 | >100 | >100 | >100 | >100 | >100 | >100 | >100 | >100 | 30 |
| | Haze | 0.45 | 0.43 | 0.31 | 0.36 | 0.41 | 0.42 | 0.38 | 0.39 | 0.29 | 0.23 | 1.30 |

As is clear from Table 4, the hard coat films prepared by using the curable resin composition of the present invention have high pencil hardness, and exhibits low curing shrinkage by using the optimum (meth)acrylate polymer. On the other hand, Comparative Example 1, not containing silica fine particles, fails to achieve sufficient pencil hardness and exhibits large curing shrinkage and large warpage. On the other hand, Comparative Example 2, employing the (meth)acrylic copolymer synthesized without using thiol, fails to achieve sufficient pencil hardness, and exhibits increased haze because of deteriorated compatibility with silica fine particles.

As is clear from Table 5, the hard coat films prepared by using the curable resin composition of the present invention have good antiblocking properties and have high pencil hardness. On the other hand, Comparative Example 3, not containing silica fine particles, fails to achieve sufficient pencil hardness, and has significantly reduced antiblocking properties. On the other hand, Comparative Example 4, employing the (meth)acrylic copolymer synthesized without using thiol, fails to achieve sufficient pencil hardness, exhibits increased haze because of deteriorated compatibility with silica fine particles, and lowered shape-following properties.

## Claims

1. A curable resin composition comprising a copolymer (A) represented by Formula (1), silica fine particles (B), a reactive monomer (C) and a polymerization initiator (D),

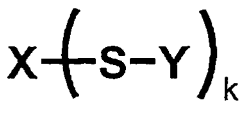
(1)

wherein X is an atomic group formed by removing "k" mercapto groups from a multifunctional thiol compound having at least "k" mercapto groups; Y is a monovalent organic group derived from a copolymer formed by copolymerizing unsaturated monomers; and "k" is an integer of 3 to 10.

2. The curable resin composition according to Claim 1, wherein "Y" in Formula (1) comprises a monomer unit represented by Formula (2).

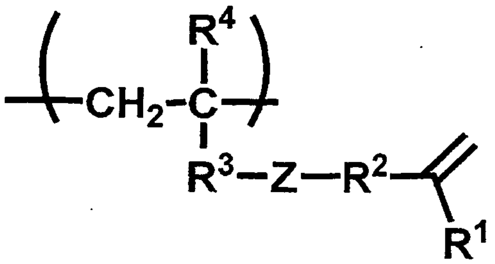
(2)

wherein $R^1$ and $R^4$ are each independently a hydrogen atom or a methyl group; $R^2$ and $R^3$ are each independently an aliphatic hydrocarbon group having 1 to 20 carbon atoms or an alicyclic hydrocarbon group with a cyclic structure having 20 or less of carbon atoms wherein $R^2$ may contain an ester bond and $R^3$ may be a single bond; and Z is a bifunctional organic group having an ester bond or a urethane bond.

3. The curable resin composition according to Claim 2, wherein -Z- in Formula (2) is represented by any of Formulas (3) to (6).

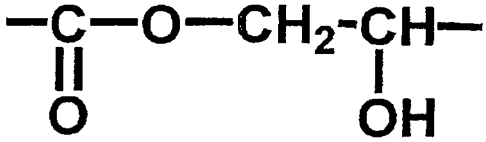
(3)

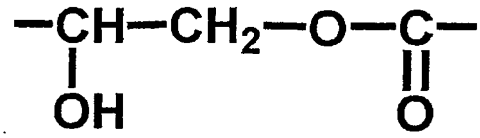

(4)

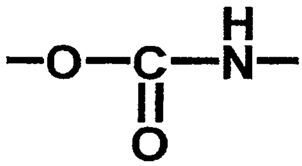

(5)

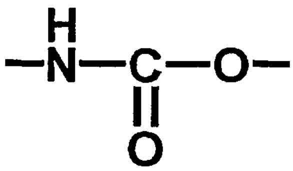

(6)

4. The curable resin composition according to any one of Claims 1 to 3, wherein the silica fine particles (B) are obtained by surface-treating silica fine particles (B'), which are not surface-treated, with at least one of a silane compound (E) represented by Formula (7) and a silane compound (E) represented by Formula (8):

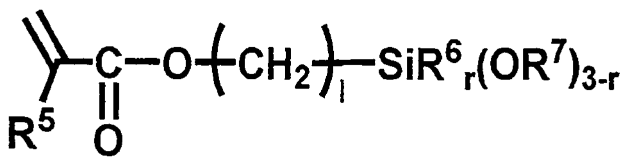

(7)

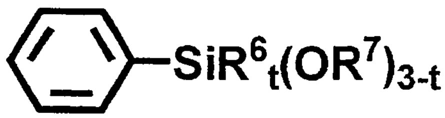

(8)

wherein $R^5$ is a hydrogen atom or a methyl group; $R^6$ is an alkyl group having 1 to 3 carbon atoms or a phenyl group; $R^7$ is a hydrogen atom or a hydrocarbon group having 1 to 10 carbon atoms; "1" is an integer of 1 to 6; and "r" and "t" are each an integer of 0 to 2.

5. The curable resin composition according to any one of Claims 1 to 4, which comprises the silica fine particles (B) in an amount of 5 to 1000 parts by mass with respect to 100 parts by mass of the copolymer (A).

6. The curable resin composition according to any one of Claims 1 to 5, which comprises the reactive monomer (C) in an amount of 1 to 1000 parts by mass with respect to 100 parts of the copolymer (A).

7. The curable resin composition according to any one of Claims 1 to 6, wherein the reactive monomer (C) is at least one monomer selected from the group consisting of trimethylolpropanetri (meth) acrylate, pentaerythritoltri (meth) acrylate, pentaerythritoltetra (meth) acrylate, ditrimethylolpropanetetra (meth) acrylate, dipentaerythritolpenta (meth) acrylate, and dipentaerythritolhexa (meth) acrylate.

8. The curable resin composition according to any one of Claims 1 to 7, which comprises the polymerization initiator (D) in an amount of 0.1 to 50 parts by mass with respect to 100 parts by mass of the total of the curable components.

**9.** The curable resin composition according to any one of Claims 1 to 8, which comprises a reactive oligomer (F) in an amount of 0.1 to 500 parts by mass with respect to 100 parts by mass of the copolymer (A).

**10.** The curable resin composition according to any one of Claims 1 to 9, which comprises a filler.

**11.** The curable resin composition according to any one of Claims 1 to 10, which comprises a multifunctional thiol compound.

**12.** The curable resin composition according to any one of Claims 1 to 11, which comprises a multifunctional isocyanate compound.

**13.** A hard coat agent comprising the curable resin composition according to any one of Claims 1 to 11.

**14.** A clear hard coat film or hard coat film for decorative molding which comprises a coating film formed by using the hard coat agent according to Claim 13.

**INTERNATIONAL SEARCH REPORT**

International application No.
PCT/JP2011/075712

A. CLASSIFICATION OF SUBJECT MATTER
*C08F290/12*(2006.01)i, *C09D4/02*(2006.01)i, *C09D157/06*(2006.01)i

According to International Patent Classification (IPC) or to both national classification and IPC

B. FIELDS SEARCHED

Minimum documentation searched (classification system followed by classification symbols)
C08F290/12, C09D4/02, C09D157/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-113005 A (Dainippon Ink and Chemicals, Inc.), 10 May 2007 (10.05.2007), claims; paragraphs [0039] to [0042], [0050]; examples & EP 1777269 A1 | 1-14 |
| Y<br>A | JP 2010-024255 A (The Nippon Synthetic Chemical Industry Co., Ltd.), 04 February 2010 (04.02.2010), claims; paragraphs [0003] to [0006], [0036], [0090] (Family: none) | 1-3,5-14<br>4 |

☒ Further documents are listed in the continuation of Box C.　　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February, 2012 (14.02.12) | 21 February, 2012 (21.02.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/075712

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-150484 A (Momentive Performance Materials Japan L.L.C.), 03 July 2008 (03.07.2008), claims; paragraphs [0002], [0003], [0010], [0026]; examples (Family: none) | 1-14 |
| A | JP 2008-201864 A (Nippon Shokubai Co., Ltd.), 04 September 2008 (04.09.2008), claims; paragraphs [0023], [0081], [0083]; examples (Family: none) | 1-14 |
| A | JP 2009-235119 A (Fuji Film Kabushiki Kaisha), 15 October 2009 (15.10.2009), claims; paragraphs [0035], [0095] to [0097]; examples (Family: none) | 1-14 |
| P,A | JP 2011-021151 A (Showa Denko Kabushiki Kaisha), 03 February 2011 (03.02.2011), claims; examples (Family: none) | 1-14 |

Form PCT/ISA/210 (continuation of second sheet) (July 2009)

**INTERNATIONAL SEARCH REPORT**

International application No.
PCT/JP2011/075712

With respect to the component (A) of the inventions of claims 1 and 4-14, the group Y of general formula (1) includes every organic group that is derived from a copolymer obtained by copolymerizing an unsaturated monomer. Only groups, each of which is formed from a polymer obtained by copolymerizing an unsaturated monomer and has at least one unsaturated group, are disclosed within the meaning of PCT Article 5. Consequently, claims 1 and 4-14 are not fully supported within the meaning of PCT Article 6.

This international search report therefore covers those supported and specifically disclosed by the description, namely organic groups which have at least an unsaturated group and are derived from polymers that are obtained by copolymerizing unsaturated monomers.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009157315 A
- JP 2008150484 A